# EUROPEAN PATENT SPECIFICATION

(11) **EP 3 107 776 B1**
(45) Date of publication and mention of the grant of the patent: **05.06.2019**
(21) Application number: 15751564.4
(22) Date of filing: 13.02.2015
(51) Int. Cl.: B60T 10/02, B60T 1/087, F16D 57/04

(54) **CONTROL UNIT FOR RETARDER, VEHICLE INCLUDING SUCH A RETARDER AND METHOD FOR ENGAGING A RETARDER**
STEUEREINHEIT FÜR EINEN RETARDER, FAHRZEUG MIT SOLCH EINEM RETARDER UND VERFAHREN ZUM BETÄTIGEN EINES RETARDERS
UNITÉ DE COMMANDE POUR RALENTISSEUR, VÉHICULE COMPRENANT LEDIT RALENTISSEUR ET PROCÉDÉ POUR ASSURER LA MISE EN PRISE D'UN RALENTISSEUR

(30) Priority: 19.02.2014 SE 1450191
(43) Date of publication of application: 28.12.2016
(73) Proprietor: Scania CV AB, 151 87 Södertälje (SE)
(72) Inventor: SANNELIUS, Mikael, S-125 33 Älvsjö (SE); RUDBERG, Arvid, S-126 37 Stockholm (SE)
(74) Representative: Scania CV AB
(86) International application number: PCT/SE2015/050176
(87) International publication number: WO 2015/126313

(56) References cited:
- WO-A1-2007/046756
- WO-A1-2013/079320
- WO-A1-2013/083427
- WO-A1-2013/083427
- WO-A1-2013/083457
- WO-A2-2014/195050
- WO-A2-2014/195051
- DE-A1- 4 113 539
- DE-A1-102006 024 011
- DE-A1-102008 034 974
- DE-A1-102011 120 644
- DE-A1-102012 007 732
- US-A- 5 333 707
- US-A1- 2006 232 127
- US-A1- 2006 232 127

## Description

### BACKGROUND OF THE INVENTION AND PRIOR ART

The present invention relates to a retarder comprising a control device according to the preamble of claim 1, a vehicle comprising such a retarder according to the preamble of claim 7, and a method for the connection of a retarder according to the preamble of claim 8.

A retarder is used to brake a driving source, such as a vehicle. Often the retarder consists of an auxiliary brake, which complements the wheel brakes of the vehicle. Thus, excessive wear of the wheel brakes is avoided.

The retarder comprises at least one rotor and one stator, together forming a torus, which is filled with a fluid as soon as a braking effect from the retarder is desired. When the torus is filled, a torque is required to rotate the rotor, and such torque is used as a braking torque by connecting the rotor to the power-train, such as the gearbox or the propeller shaft in a vehicle. Thus, the rotor applies a braking torque on the vehicle's power-train, when the rotor is connected to the power-train. When the braking torque is to cease, the fluid is evacuated from the torus. However, the power-train continues to operate the rotor when the fluid has been evacuated, which means that the rotor applies a small, but not non-existent, residual torque on the power-train. The residual torque entails that the vehicle's fuel consumption increases. In order to reduce energy losses and thus reduce the vehicle's fuel consumption, the retarder circuit is disconnected from the power-train with a coupling device when the retarder is deactivated and does not have to brake the vehicle. The retarder rotor is at a standstill or near standstill when the retarder is not activated.

In a retarder whose torus is filled with water, the braking torque is controlled via the volume of water present and active in the torus. The volume is controlled with one or several throttle valves, arranged on an inlet or outlet channel to or from the torus, or an outlet channel from the torus. By limiting the outflow of water from the torus, the pressure in the torus increases. When the throttle valve placed in the retarder's outlet channel is opened, the water volume in the torus will thus decrease, which in turn means that the pressure in the torus drops. The water, or a sub-volume of the water present in the torus, will evaporate as the static pressure in the torus drops to the vapour pressure for water.

When the retarder is to be deactivated, the inflow of water to the torus is stopped and the control valve is opened, so that water may be evacuated from the torus. However, the pressure in parts of the torus and in the evacuation channel from the torus will not fall below the vapour pressure, and therefore water may remain in the torus, even though evacuation of water is desired. The water remaining in the torus contributes to the non-desired residual torque, which contributes to an increased fuel consumption. By disconnecting the retarder circuit, and thus the retarder shaft connected with the rotor, from the vehicle's power-train, the residual torque is eliminated.

Problems arise, however, at the next instance of use, when the retarder is to be connected for braking, since water is present in the torus, which leads to an unacceptably high connecting torque, entailing substantial strains on the mechanical components that handle the connection of the rotor with the power-train. In order to solve this problem, a negative pressure generator, such as a vacuum suction device, may be connected to the retarder circuit to suck out water remaining in the torus. Accordingly, the connecting torque is reduced when the retarder has to be activated.

In case a component in the retarder circuit fails, however, water will remain in the torus when the retarder is connected, which leads to a very substantial connecting torque. Thus, the coupling device, which handles the connection of the retarder's rotor to the power-train, will be subjected to high stresses, which may lead to a failure of the coupling device.

Document WO2013083457 A1 shows a retarder that can be disengaged by a disconnect clutch.

Document WO 2013083427 A1 shows a disconnectable retarder with a control device, which interrupts the connection of the retarder depending on the progress of the retarder's start-up process.

Document US 2006/0232127 A1 shows a retarder, wherein the pressure in the retarder circuit is monitored with a pressure sensor.

### SUMMARY OF THE INVENTION

Despite prior art solutions, there is a need to further develop a retarder comprising a control device, which monitors and controls the connecting process of the retarder's rotor, so that a clutch element is able to connect the rotor to a driving source, to avoid that the clutch element fails and to increase the life and reliability of the clutch element.

The objective of the invention is to provide a retarder comprising a control device, which monitors and controls the connecting process of the rotor in a retarder.

Another objective of the invention is to provide a coupling device with a long life and high reliability for a retarder.

These objectives are achieved with a retarder of the type specified at the beginning, which is characterised by the features specified in claim 1.

The control device according to the invention monitors the retarder so that the connecting torque does not exceed the maximum torque for which the clutch element is dimensioned. By using a pressure sensor arranged at the torus to measure the pressure in the torus, the torque of the rotor and the retarder shaft may be calculated. The control device receives information about the pressure, and thus the torque. In case the connecting torque exceeds the maximum torque for which the clutch element is dimensioned, the control device will instruct the connecting torque to interrupt the connection. Thus, failure of the clutch element is avoided. The control device according to the invention thus also creates conditions for low wear of the clutch element, which increases the life and reliability of the clutch element.

The above objectives are achieved also with a vehicle of the type specified at the beginning, which is characterised by the features specified in claim 7. The vehicle will be decelerated by the connected retarder. The control device receives signals from the pressure sensor, and emits signals to control the coupling element depending on the pressure measured in the torus. Should the pressure during the process of connecting the retarder rotor exceed predetermined threshold values, the connection is interrupted with the objective of avoiding wear and potential failure of the clutch element. The controlled connection and disconnection of the retarder with use of the control device therefore entails that the life and reliability of the clutch element increases, which means that the vehicle may use a functioning auxiliary brake for a longer period, reducing the wear of the vehicle's wheel brakes. Often, a pressure sensor is arranged in existing retarder systems, which pressure sensors estimate the torque at normal braking with the retarder, in order to increase torque accuracy in this manner, and facilitate the brake-force distribution with the vehicle's wheel brakes.

The above objectives are also achieved with a method for the connection of a retarder of the type specified at the beginning, which is characterised by the features specified in claim 8.

With the innovative method conditions are achieved for low wear of the clutch element, which increases the clutch element's life and reliability. At the same time, failure of the clutch element is avoided. By measuring the pressure in the torus with the pressure sensor, the torque of the rotor and the retarder shaft may be calculated. The control device receives information about the pressure, and thus the torque, and will instruct the clutch element to interrupt the connection by disconnecting the first shaft from the second shaft if the pressure, or the pressure change between the starting pressure and the pressure, achieves or exceeds a predetermined threshold value.

With the innovative method, a fast and direct pressure response is obtained, which provides information that the torus still contains water. Other detection methods, such as measuring the fluid level or the retarder shaft's acceleration are not as fast or as accurate.

According to one embodiment of the invention, the connection is interrupted by way of the pressure, or the pressure change between the starting pressure and the pressure, achieving or exceeding a predetermined threshold value within a predetermined time period, and/or within a predetermined engine speed interval of the first shaft.

Other advantages of the invention are set out in the detailed description below.

### BRIEF DESCRIPTION OF THE DRAWINGS

Below is a description, as an example, of preferred embodiments of the invention with reference to the enclosed drawings, in which:
Fig. 1 shows a schematic side view of a vehicle with a control device for a retarder according to the present invention,
Fig. 2 shows a control device for a retarder according to the present invention,
Fig. 3 shows a graph of different pressure levels in a retarder according to the present invention, and
Fig. 4 shows a flow chart of a method for connection of a retarder according to the present invention.

### DETAILED DESCRIPTION OF PREFERRED EMBODIMENTS OF THE INVENTION

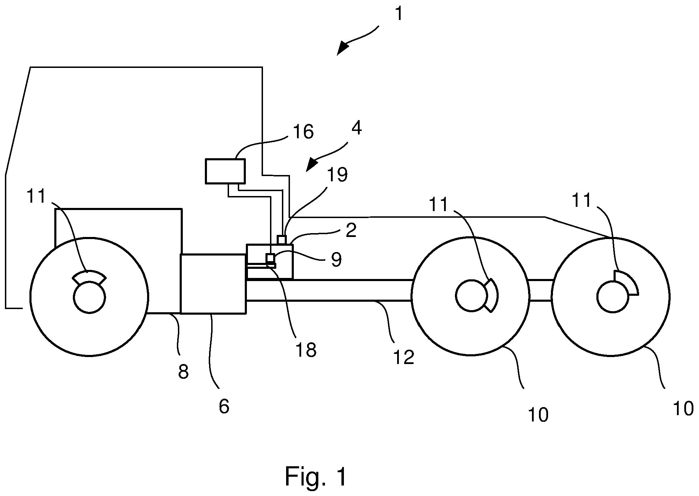

Fig. 1 shows a schematic side view of a vehicle 1, which vehicle 1 is equipped with a retarder 2, which is connected and disconnected with a control device 4 according to the present invention. The vehicle 1 is also equipped with a gearbox 6, which is connected to a combustion engine 8, which drives the driving wheels 10 of the vehicle 1 via the gearbox 6 and a propeller shaft 12. The driving wheels 10 are equipped with wheel brakes 11. A control device 16 is arranged to control the retarder 2. The retarder 2 comprises a rotatable first shaft 18, which is equipped with a first engine speed sensor 9 to detect the speed of the first shaft 18. The engine speed sensor 9 is connected to the control device 16. The control device 4 is also equipped with a pressure sensor 19.

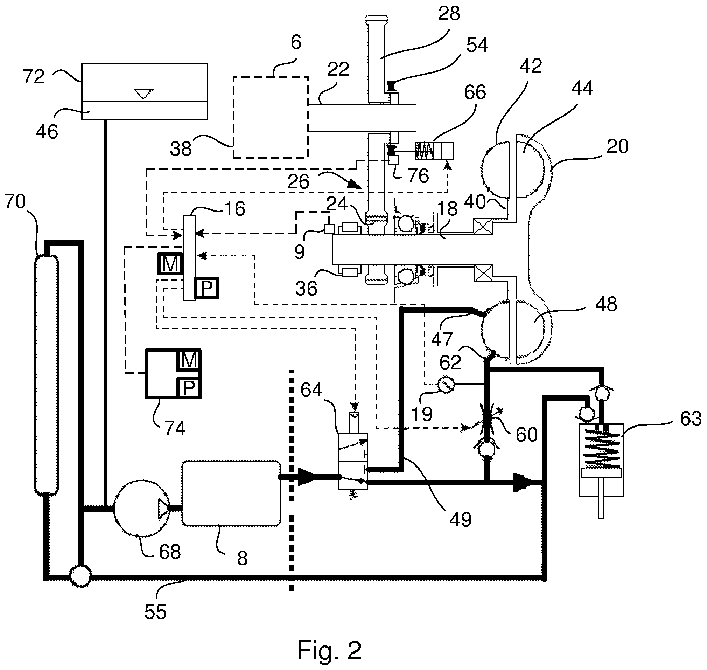

Fig. 2 shows a control device for a retarder according to the present invention. The first shaft 18 is connected with a rotor 20 of the retarder 2, and a second shaft 22 is arranged to engage with a driving source. According to the embodiment shown in Fig. 2, the driving source is arranged in the vehicle 1, wherein the connection of the retarder 2 with the vehicle 1 is carried out via the gearbox 6, which thus constitutes the driving source. In Fig. 2 the gearbox 6 is displayed schematically. The second shaft 22 may thus consist of the propeller shaft 12, which is connected with the gearbox 6 and the vehicle's driving wheels 10.

A transmission 26, in the form of a first cogwheel 24 fixedly arranged on the first shaft 18, engages with a disconnectable second cogwheel 28 arranged on the second shaft 22. Preferably, a gearing ratio 3:1 is implemented through the transmission 26, but other gearings are also possible, e.g. 1:1. The first shaft 18 is preferably mounted with a bearing 36 in a retarder house 40, and possibly also in a gearbox house 38. On the first shaft 18 the rotor 20 is arranged, which in a connected state rotates with a speed proportionate to the speed of the second shaft 22. A stator 42 is connected to the retarder housing 40, and will therefore not rotate.

The rotor 20 and the stator 42 jointly form a toroidal void shape, called torus 44, which through an inlet opening 47 is filled with a fluid 46, such as water, when the retarder 2 applies a braking torque on the second shaft 22 of the driving source in order to brake the vehicle 1, to thus reduce or maintain the vehicle's 1 speed. The braking effect arises since the rotor 20 and the stator 42 are equipped with blades or shovels 48, creating a flow of fluid in the torus 44 when the rotor 20 rotates. The flow of fluid creates, in interaction with the shovels 48 of the rotor 20 and the stator 42, a reaction force which forms the braking effect. The higher the engine speed of the rotor 20, and the greater the amount of fluid in torus 44, the greater the reaction force, and thus the torque, becomes. On the occasions when the retarder 2 does not have to brake the vehicle 1, the torus 44 is wholly or partly drained of the fluid 46, which is partly replaced with steam, entailing that the shovels 48 of the rotor 20 and the stator 42 primarily will create a steam flow in the torus 44. The steam flow causes an undesirable reaction force to act on the first shaft 18, which generates a braking torque on the second shaft 22. The braking torque from the retarder 2 entails that the fuel consumption of the vehicle 1 increases, when the combustion engine 8 of the vehicle 1 exerts a torque. The friction from the bearings 36 and seals of the first shaft 18 also emits a reaction force, which entails an increased fuel consumption. For this reason, the first shaft 18 may be disconnected from the second shaft 22 when the retarder 2 is not used to brake the vehicle 1. The fuel consumption of the vehicle 1 may thus be reduced. Filling the torus 44 with fluid 46, and draining it of this, is done via a fluid circuit 49.

The torus 44 must be filled with fluid 46 as quickly as possible when a braking effect from the retarder 2 is desired. A slow filling initially entails a lack of a braking effect from the retarder 2, leading to an exaggerated use of the wheel brakes 11 of the vehicle 1, which will be exposed to unnecessary wear.

The disconnectable cogwheel 28 on the second shaft 22 entails that the first shaft 18, and thus the rotor 20 of the retarder 2, may be disconnected from the gearbox 6, entailing that the retarder 2 does not apply a braking torque on the vehicle 1 when the retarder 2 is deactivated. When the retarder 2 is to be activated, the retarder 2 must be connected mechanically with the second output shaft 22 of the gearbox 6 in a quick and efficient manner. In order to achieve this, a clutch element 54 is arranged between the second cogwheel 28 and the second shaft 22. The coupling element 54 preferably consists of a synchronisation device with synchronisation rings (not displayed). Such a synchronisation device is often present in gearboxes. It is also possible to adapt the coupling element 54 as a friction clutch, such as a multi-plate clutch.

When the retarder 2 is to be activated in order to brake the vehicle 1, the clutch element 54 is thus activated, since the second cogwheel 28 is connected with the second shaft 22 via the clutch element 54. Since the second shaft 22 rotates at the connection and the first shaft 18 stands still, the clutch element 54 will make the first shaft 18 rotate by way of the transmission 26. The clutch element 54 is dimensioned to be able to transfer the large braking torque exerted by the retarder 2 to the second shaft 22.

Preferably, the fluid 46 supplied to the torus 44 is water. The water is supplied from the coolant system 55 of the combustion engine 8. Thus, the fluid circuit 49 of the retarder 2 is connected with the coolant system 55 of the combustion engine 8. The retarder's 2 braking torque is controlled by way of the volume of water which is active in the torus. The water volume is controlled with a control valve 60, which is arranged on an outlet channel 62 from the torus 44. By limiting the outflow of water from the torus 44 with the control valve 60, the pressure p in the torus 44 increases. When the control valve 60 is opened, the water volume in the torus 4 will thus decrease, which in turn means that the pressure p in the torus 44 drops. The water, or a sub-volume of the water present in the torus 44, will evaporate as the static pressure p in the torus 44 drops to the vapour pressure for water.

When the retarder 2 is to be deactivated, the inflow of water to the torus 44 is cut off and the control valve 60 is opened, so that water may be evacuated from the torus 44. However, the pressure p in parts of torus 44 and in the evacuation channel from the torus will not fall below the vapour pressure, and therefore the water in the torus 44 may remain in the torus 44, even though evacuation of water is desired. The water remaining in the torus 44 contributes to the non-desired residual torque, which contributes to an increased fuel consumption. By disconnecting the second cogwheel 28 from the second shaft 22, so that the first shaft 18 connected with the rotor 20 is disconnected from the second driving shaft 22 of the vehicle 1, the residual torque is eliminated.

Problems arise, however, when the retarder 2 is to be connected at the next instance of use, since water is present in the torus 44, leading to an unacceptably high torque and entailing substantial stress in the clutch element 54. In order to suck out remaining water in the torus, a vacuum suction device 63 may be connected in the retarder circuit 49. Accordingly, the connecting torque is reduced when the retarder 2 is to be activated.

In case one component in the retarder circuit 49 fails, however, water will remain in the torus 44 when the retarder 2 is connected, entailing that the connecting torque becomes very substantial. In order to avoid that the clutch element 54 is subjected to too great a torque, the control device 4 according to the invention monitors the connection of the retarder 2, so that he connecting torque does not exceed the maximum torque for which the clutch element 54 is dimensioned. The pressure sensor 19 arranged at the torus 44 measures the pressure p in torus 44 or downstream of torus 44. The pressure p in torus 44 is proportionate to the torque applied by the rotor 22. Thus, the torque of the rotor 20 and the first shaft 18 may be calculated, entailing that the torque, which the clutch element 54 must transmit at the connection of the retarder 2 for braking of the vehicle 1, may be determined.

The control device 16 is connected to the pressure sensor 19, the control valve 60 and the speed sensor 9. A directing valve 64 is also connected to the control device 16. The directing valve 64 is included in the retarder circuit 49 and opens and closes by signals from the control device 16. When the retarder 2 is activated, the directing valve 64 is opened to supply water to the torus 44, and when the retarder 2 is deactivated, the directing valve 64 is closed, so that no water is supplied to the torus 44. The control device 16 is also connected to a force element 66 which connects and disconnects the clutch element 54. The force element 66 may be a hydraulic or pneumatic cylinder or an electric motor, which controls the clutch element 54.

The control device 16 receives information about the pressure p from the pressure sensor 19, which entails that the torque of the first shaft 18 may be determined. In case the connecting torque exceeds the maximum torque for which the clutch element 54 is dimensioned, the control device 16 will, via the force element 66, instruct the connecting torque 54 to interrupt the connection. Thus, failure of the clutch element 54 is avoided. The control device 2 according to the invention thus also creates conditions for low wear of the clutch element 54, which increases the life and reliability of the clutch element 54.

In case the torque from the first shaft 18 falls below the maximum torque for which the clutch element 54 is dimensioned, the torus 44 of the retarder 2 is filled with water by way of the control device 16 giving instructions to the directional valve 64 to open, so that water from the cooling system 55 of the combustion engine 8 is allowed to pass the directing valve 64 and flow to the torus 44, which entails that the retarder 2 will apply a braking action on the vehicle 1. In order to achieve that the water in the cooling system 55 and the retarder circuit 49 flows through the directing valve 64, and further along to the torus 44, a coolant pump 68 is used. When the rotor 20 rotates, the rotor 20 will also pump water through the retarder circuit 49. In the coolant system, there is also a heat exchanger 70 and an expansion tank 72.

According to the above, the retarder 2 is described as being arranged in a vehicle 1 in order to brake the vehicle 1, but it is also possible to use the retarder 2 according to the present invention for other applications. According to the above, the vehicle 1, the combustion engine 8, the gearbox 6 or the propeller shaft 12 may constitute a driving source, which is connected directly or indirectly to the retarder 2. Other driving sources may, however, be connected to the retarder 2.

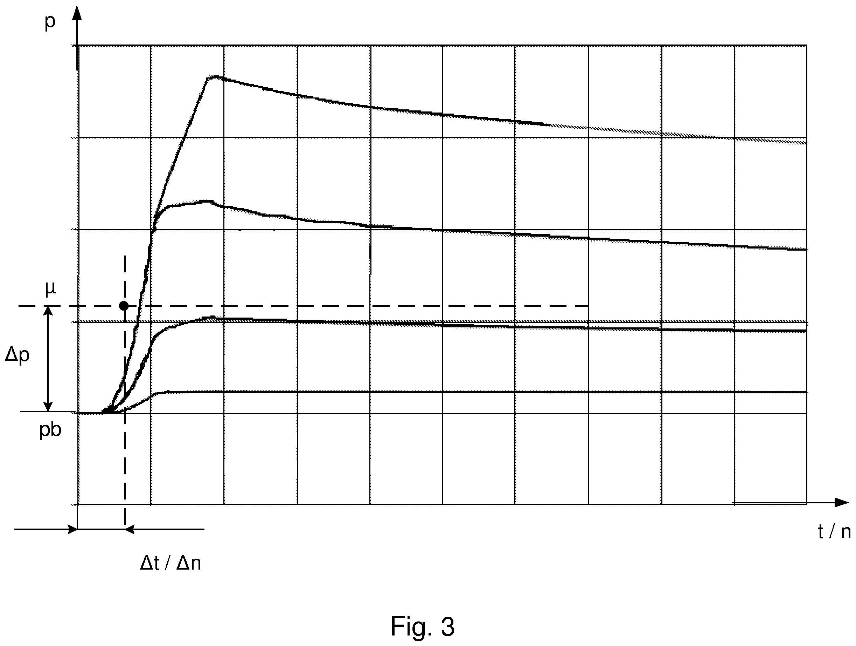

Fig. 3 shows graphs of different pressure levels in a retarder according to the present invention. The graphs represent the pressure p in the torus 44 in relation to time t or the engine speed n of the first shaft 18. At the connection of the first shaft 18 via the clutch element 54, the first shaft 18 accelerates. In case there is water in the torus 44, the pressure p in the torus 44 will increase when the first shaft 18 accelerates. If the pressure p, or the pressure change Δp between the starting pressure pb and the pressure p, achieves or exceeds a predetermined threshold value µ, the control device 16 will instruct the clutch element 54 via the force element 66 to interrupt the connection. Thus, failure of the clutch element 54 is avoided. According to one embodiment the control device 16 will, via the force element 66, instruct the clutch element 54 to interrupt the connection if the pressure or the pressure change Δp achieves or exceeds a predetermined threshold value µ within a predetermined time period Δt, and/or within a predetermined engine speed interval Δn of the first shaft 18. The threshold value µ and the time period Δt and the engine speed interval Δn are determined based on the clutch element's 54 maximum torque, which it is designed to handle. According to the embodiment in Fig. 3, the threshold value µ has been marked and specified as the pressure p, whereat the control device 16 will instruct the clutch element 54 via the force element 66 to interrupt the connection. A position sensor 76 may be arranged at the clutch element 54, which position sensor 76 emits signals about the position of the clutch element 54. Thus, an indication is received as to how much the clutch element 54 has been connected.

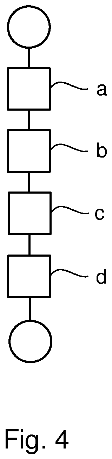

A method for connection of the retarder 2 will be explained with the help of Figure 4. The flow chart in Fig. 4 shows the following steps:
a) measuring the starting pressure pb in the torus 44,
b) controlling the clutch element 54 to connect the first and second shafts 18, 22,
c) measuring the pressure p in the torus 44, and
d) disconnecting the first shaft (18) from the second shaft (22) if the pressure (p), or the pressure change Δp between the starting pressure pb and the pressure p, achieves or exceeds a predetermined threshold value µ.

Preferably, the first shaft 18 is disconnected from the second shaft 22 if the predetermined threshold value µ is achieved or exceeded within a predetermined time period Δt, and/or within a predetermined engine speed interval Δn of the first shaft 18.

Preferably, a control device 16 receives information about the starting pressure pb and the pressure p from a pressure sensor 19, and controls the clutch element 54 so that the first shaft 18 is disconnected from the second shaft 22, if the predetermined threshold value µ is achieved or exceeded.

Preferably steps a) - d) are repeated until the pressure or the pressure change Δp falls below the predetermined threshold value µ.

Preferably the torus comprises an inlet channel 47 and an outlet channel 62, wherein the starting pressure pb and the pressure p are measured in the outlet channel 62.

Preferably the predetermined time period Δt is calculated as of a point in time when the clutch element 54 is controlled to begin the connection of the first and second shafts 18, 22.

According to the invention, a computer program P is provided, which may comprise procedures to control the connection of the retarder 2 according to the present invention.

The computer program P may comprise procedures for control of the connection of the retarder 2 according to the above mentioned method steps.

The program P may be stored in an executable manner, or in a compressed manner, in a memory M and/or in a read/write memory R.

The invention also relates to a computer program product, comprising program code stored in a medium readable by a computer 74, in order to perform the method steps specified above, when said program code is executed in the control device 16, or another computer 74 connected to the control device 16.

The components and features specified above may, within the framework of the invention, be combined between different embodiments specified.

## Claims

1. A retarder comprising a control device (4);
a first shaft (18) which is connected with a rotor (20) of the retarder (2);
a second shaft (22) which is arranged to engage with a driving source;
a first clutch element (54) arranged between the first and the second shafts (18, 22); and
a pressure sensor (19) arranged at a torus (44) formed between the rotor (20) and a stator, which torus comprises an inlet channel (47) and an outlet channel (62), which are arranged to supply and evacuate, respectively, water (46) to and from the torus (44),
**characterised in that** the pressure sensor (19) is connected with a control device (16), which is arranged to receive signals from the pressure sensor (19) in relation to pressure (p) measured in the torus (44), and arranged to emit signals to control the clutch element (54) depending on the pressure (p) measured in the torus (44).

2. A retarder according to claim 1, **characterised in that** the pressure sensor (19) is arranged in the outlet channel.

3. A retarder according to any of claims 1 or 2, **characterised in that** the clutch element (54) is a synchronisation device.

4. A retarder according to any of claims 1 or 2, **characterised in that** the clutch element (54) is a friction clutch.

5. A retarder according to any of the previous claims, **characterised in that** the driving source is arranged in a vehicle (1).

6. A retarder according to claim 5, **characterised in that** the second shaft (22) is a propeller shaft (12), arranged to engage with the driving wheels of the vehicle (1).

7. Vehicle (1), **characterised by** the fact that it comprises a retarder according to any of claims 1-6.

8. Method for connection of a retarder (2), comprising
a first shaft (18) which is connected with a rotor (20) of the retarder (2);
a second shaft (22) which is arranged to engage with a driving source;
a clutch element (54) arranged between the first and the second shaft (18, 22); and a torus (44) formed between the rotor (20) and a stator, which torus comprises an inlet channel (47) and an outlet channel (62), which are arranged to supply and evacuate, respectively, water (46) to and from the torus (44),
**characterised in that** the method comprises the following steps:
a) measuring the starting pressure (pb) in the torus 44,
b) controlling the clutch element (54) to connect the first and second shafts (18, 22),
c) measuring the pressure (p) in the torus (44), and
d) disconnecting the first shaft (18) from the second shaft (22) if the pressure (p), or the pressure change (Δp) between the starting pressure (pb) and the pressure (p), achieves or exceeds a predetermined threshold value (µ).

9. Method according to claim 8, **characterised in that** the first shaft (18) is disconnected from the second shaft (22) if the predetermined threshold value (µ) is achieved or exceeded within a predetermined time period (Δt), and/or within a predetermined engine speed interval (Δn) of the first shaft (18).

10. Method according to any of claims 8 - 9, **characterised in that** a control device (16) receives information about the starting pressure (pb) and the pressure (p) from a pressure sensor (19), and controls the clutch element (54) so that the first shaft (18) is disconnected from the second shaft (22) if the predetermined threshold value (µ) is achieved or exceeded.

11. Method according to any of claims 8 - 10, **characterised in that** the steps a) - d) are repeated until the pressure (p) or the pressure change (Δp) falls below the predetermined threshold value (µ).

12. Method according to any of claims 8 - 11, **characterised in that** the torus comprises an inlet channel (47) and an outlet channel (62), wherein the starting pressure (pb) and the pressure (p) are measured in the outlet channel (62).

13. Method according to any of claims 8 - 12, **characterised in that** the predetermined time period (Δt) is calculated from a point in time when the clutch element (54) is controlled to begin the connection of the first and the second shafts (18, 22).

14. Computer program (P) for controlling a retarder (2), wherein said computer program (P) comprises program code to cause an electronic control device (16), or another computer (74) connected to the electronic control device (16), to perform the steps according to any of claims 8-13.

15. Computer program product, comprising a program code stored in a medium readable by a computer (74), in order to perform the method steps according to any of claims 8-13, when said program code is executed in an electronic control device (16) or in another computer (74) connected to the electronic control device (16).

## Patentansprüche

1. Retarder, umfassend eine Steuervorrichtung (4);
eine erste Welle (18), die mit einem Rotor (20) des Retarders (2) verbunden ist;
eine zweite Welle (22), die dazu eingerichtet ist, mit einer Antriebsquelle gekoppelt zu sein;
ein erstes Kopplungselement (54), das zwischen der ersten und der zweiten Welle (18, 22) angeordnet ist; und
ein Drucksensor (19), der an einem Torus (44) angeordnet ist, der zwischen dem Rotor (20) und einem Stator ausgebildet ist, wobei der Torus einen Einlasskanal (47) und einen Auslasskanal (62) umfasst, die entsprechend dazu eingerichtet sind, Wasser (46) dem Torus (44) bereitzustellen oder von diesem zu evakuieren,
**dadurch gekennzeichnet, dass** der Drucksensor (19) mit einer Steuervorrichtung (16) verbunden ist, die dazu eingerichtet ist, Signale von dem Drucksensor (19) in Bezug zu dem in dem Torus (44) gemessenen Druck (p) zu empfangen, und dazu eingerichtet ist, Signale auszusenden, um das Kopplungselement (54) abhängig von dem in dem Torus (44) gemessenen Druck (p) zu steuern.

2. Retarder nach Anspruch 1, **dadurch gekennzeichnet, dass** der Drucksensor (19) in dem Auslasskanal angeordnet ist.

3. Retarder nach einem der Ansprüche 1 oder 2, **dadurch gekennzeichnet, dass** das Kopplungselement (54) eine Synchronisationsvorrichtung ist.

4. Retarder nach einem der Ansprüche 1 oder 2, **dadurch gekennzeichnet, dass** das Kopplungselement (54) eine Reibungskupplung ist.

5. Retarder nach einem der vorhergehenden Ansprüche, **dadurch gekennzeichnet, dass** die Antriebsquelle in einem Fahrzeug (1) angeordnet ist.

6. Retarder nach Anspruch 5, **dadurch gekennzeichnet, dass** die zweite Welle (22) eine Antriebswelle (12) ist, die dazu eingerichtet ist, mit den Antriebsrädern des Fahrzeugs (1) gekuppelt zu sein.

7. Fahrzeug (1), **dadurch gekennzeichnet, dass** es einen Retarder nach einem der Ansprüche 1-6 umfasst.

8. Verfahren zum Verbinden eines Retarders (2), umfassend
eine erste Welle (18), die mit einem Rotor (20) des Retarders (2) verbunden ist;
eine zweite Welle (22), die dazu eingerichtet ist, mit einer Antriebsquelle gekuppelt zu sein;
ein Kopplungselement (54), das zwischen der ersten und der zweiten Welle (18, 22) angeordnet ist; und
ein Torus (44), der zwischen dem Rotor (20) und einem Stator ausgebildet ist, wobei der Torus einen Einlasskanal (47) und einen Auslasskanal (62) umfasst, die entsprechend dazu eingerichtet sind, Wasser (46) dem Torus (44) bereitzustellen oder von diesem zu evakuieren,
**dadurch gekennzeichnet, dass** das Verfahren die folgenden Schritte umfasst:
a) Erfassen des Startdrucks (pb) in dem Torus (44),
b) Steuern des Kopplungselements (54), das mit der ersten und zweiten Welle (18, 22) verbunden ist,
c) Erfassen des Drucks (p) in dem Torus (44), und
d) Trennen der ersten Welle (18) von der zweiten Welle (22), wenn der Druck (p), oder die Druckänderung (Δp) zwischen dem Startdruck (pb) und dem Druck (p), einen vorgegebenen Schwellenwert (µ) erreicht oder überschreitet.

9. Verfahren nach Anspruch 8, **dadurch gekennzeichnet, dass** die erste Welle (18) von der zweiten Welle (22) getrennt wird, wenn der vorgegebene Schwellenwert (µ) innerhalb einer vorgegebenen Zeitdauer (Δt), und/oder innerhalb eines vorgegebenen Motordrehzahlintervalls (Δn) der ersten Welle (18) erreicht oder überschritten wird.

10. Verfahren nach einem der Ansprüche 8 - 9, **dadurch gekennzeichnet, dass** eine Steuervorrichtung (16) Informationen über den Startdruck (pb) und dem Druck (p) von einem Drucksensor (19) empfängt und das Kopplungselement (54) derart steuert, dass die erste Welle (18) von der zweiten Welle (22) getrennt wird, wenn der vorgegebene Schwellenwert (µ) erreicht oder überschritten wird.

11. Verfahren nach einem der Ansprüche 8 - 10, **dadurch gekennzeichnet, dass** die Schritte a) - d) wiederholt werden, bis der Druck (p) oder die Druckänderung (Δp) unter den vorgegebenen Schwellenwert (µ) fällt.

12. Verfahren nach einem der Ansprüche 8 - 11, **dadurch gekennzeichnet, dass** der Torus einen Einlasskanal (47) und einen Auslasskanal (62) umfasst, wobei der Startdruck (pb) und der Druck (p) in dem Auslasskanal (62) gemessen werden.

13. Verfahren nach einem der Ansprüche 8 - 12, **dadurch gekennzeichnet, dass** die vorgegebene Zeitdauer (Δt) ausgehend von einem Zeitpunkt berechnet wird, zu dem das Kopplungselement (54) gesteuert wird, das Verbinden der ersten und zweiten Welle (18, 22) zu beginnen.

14. Computerprogramm (P) zum Steuern eines Retarders (2), wobei das Computerprogramm (P) Programmcode umfasst, der eine elektronische Steuervorrichtung (16), oder einen anderen Computer (74), der mit der elektronischen Steuervorrichtung (16) verbunden ist, dazu veranlasst, die Schritte nach einem der Ansprüche 8-13 durchzuführen.

15. Computerprogrammprodukt, umfassend einen Programmcode, der auf einem von einem Computer (74) lesbaren Medium gespeichert ist, um die Verfahrensschritte nach einem der Ansprüche 8-13 durchzuführen, wobei der Programmcode auf einer elektronischen Steuervorrichtung (16) oder einem anderen Computer (74) ausgeführt wird, der mit der elektronischen Steuervorrichtung (16) verbunden ist.

## Revendications

1. Ralentisseur comprenant un dispositif de commande (4) ; un premier arbre (18) qui est relié à un rotor (20) du ralentisseur (2) ;
un second arbre (22) qui est agencé pour entrer en prise avec une source motrice ;
un premier élément d'embrayage (54) agencé entre les premier et second arbres (18, 22) et
un capteur de pression (19) agencé au niveau d'un tore (44) formé entre le rotor (20) et un stator, lequel tore comprend un canal d'admission (47) et un canal d'évacuation (62), qui sont agencés pour alimenter et évacuer, respectivement, l'eau (46) vers et depuis le tore (44),
**caractérisé en ce que** le capteur de pression (19) est connecté à un dispositif de commande (16) conçu pour recevoir des signaux du capteur de pression (19) en relation avec la pression (p) mesurée dans le tore (44), et agencé pour émettre des signaux pour commander l'élément d'embrayage (54) en fonction de la pression (p) mesurée dans le tore (44).

2. Ralentisseur selon la revendication 1 **caractérisé en ce que** le capteur de pression (19) est agencé dans le canal d'évacuation.

3. Ralentisseur selon l'une quelconque des revendications 1 ou 2, **caractérisé en ce que** l'élément d'embrayage (54) est un dispositif de synchronisation.

4. Ralentisseur selon l'une quelconque des revendications 1 ou 2, **caractérisé en ce que** l'élément d'embrayage (54) est un embrayage à friction.

5. Ralentisseur selon l'une quelconque des revendications précédentes, **caractérisé en ce que** la source motrice est agencée dans un véhicule (1).

6. Ralentisseur selon la revendication 5, **caractérisé en ce que** le second arbre (22) est un arbre d'hélice (12), agencé pour venir en prise avec les roues motrices du véhicule (1).

7. Véhicule (1), **caractérisé en ce qu'**il comprend un ralentisseur selon les revendications 1 à 6.

8. Procédé de raccordement d'un ralentisseur (2), comprenant un premier arbre (18) qui est relié à un rotor (20) du ralentisseur (2) ;
un second arbre (22) qui est agencé pour entrer en prise avec une source motrice ;
un élément d'embrayage (54) agencé entre les premier et second arbres (18, 22) ; et un tore (44) formé entre le rotor (20) et un stator, lequel tore comprend un canal d'admission (47) et un canal d'évacuation (62), qui sont agencés pour alimenter et évacuer, respectivement, l'eau (46) vers et depuis le tore (44),
**caractérisé en ce que** le procédé comprend les étapes suivantes :
a) la mesure de la pression de démarrage (pb) dans le tore (44),
b) la commande de l'élément d'embrayage (54) pour raccorder les premier et second arbres (18, 22),
c) la mesure de la pression (p) dans le tore (44), et
d) le désaccouplement du premier arbre (18) du second arbre (22) si la pression (p) ou le changement de pression (Δp) entre la pression initiale (pb) et la pression (p) atteint ou dépasse une valeur de seuil prédéterminée (µ).

9. Procédé selon la revendication 8, **caractérisé par le fait que** le premier arbre (18) est désaccouplé du second arbre (22) si la valeur de seuil prédéterminée (µ) est atteinte ou dépassée dans une période de temps prédéterminée (Δt) et/ou dans un intervalle de vitesse de moteur prédéterminé (Δn) du premier arbre (18).

10. Procédé selon l'une quelconque des revendications 8 à 9, **caractérisé en ce qu'**un dispositif de commande (16) reçoit des informations sur la pression initiale (pb) et la pression (p) d'un capteur de pression (19) et commande l'élément d'embrayage (54) de sorte que le premier arbre (18) soit désaccouplé du second arbre (22) si la valeur de seuil prédéterminée (µ) est atteinte ou dépassée.

11. Procédé selon l'une quelconque des revendications 8 à 10, **caractérisé en ce que** les étapes a)-d) sont répétées jusqu'à ce que la pression (p) ou le changement de pression (Δp) tombe en dessous de la valeur de seuil prédéterminée (µ).

12. Procédé selon l'une quelconque des revendications 8 à 11, **caractérisé en ce que** le tore comprend un canal d'admission (47) et un canal d'évacuation (62), dans lequel la pression de départ (pb) et la pression (p) sont mesurées dans le canal d'évacuation (62).

13. Procédé selon l'une quelconque des revendications 8 à 12, **caractérisé en ce que** la période de temps prédéterminée (Δt) est calculée à partir d'un instant où l'élément d'embrayage (54) est commandé pour commencer le raccordement des premier et second arbres (18, 22).

14. Programme informatique (P) pour la commande d'un ralentisseur (2), dans lequel ledit programme informatique comprend un code de programme pour amener une unité de commande électronique (16) ou un autre ordinateur (74) connecté à l'unité de commande électronique (16) à exécuter les étapes selon l'une quelconque des revendications 8 à 13.

15. Produit de programme informatique comprenant un code de programme stocké sur un support lisible par ordinateur (74) pour l'exécution des étapes de procédé selon l'une quelconque des revendications 8 à 13 lorsque ledit code de programme est exécuté sur une unité de commande électronique (16) ou un autre ordinateur (74) connecté à l'unité de commande électronique (16).
